## Europäisches Patentamt
## European Patent Office
## Office européen des brevets

(19)

(11) Veröffentlichungsnummer: **0 006 844**
**B1**

(12) **EUROPÄISCHE PATENTSCHRIFT**

(45) Veröffentlichungstag der Patentschrift: **27.04.83**

(21) Anmeldenummer: **78100328.0**

(22) Anmeldetag: **07.07.78**

(51) Int. Cl.³: **F 16 B 5/06** //E04B1/347,
F24J3/02, B44C7/02,
E06B3/28

(54) Stabelement zum Einklemmen von Folien oder Bahnen und Rahmen hergestellt aus diesen Stabelementen.

(43) Veröffentlichungstag der Anmeldung:
**23.01.80 Patentblatt 80/2**

(45) Bekanntmachung des Hinweises auf die Patenterteilung:
**27.04.83 Patentblatt 83/17**

(84) Benannte Vertragsstaaten:
**BE CH FR GB NL SE**

(56) Entgegenhaltungen:
FR - A - 2 155 239
FR - A - 2 385 930
GB - A - 968 607
US - A - 1 698 885
US - A - 1 716 172
US - A - 1 792 853
US - A - 2 526 912
US - A - 2 804 139
US - A - 4 057 941

(73) Patentinhaber: **Feilhauer, Ingrid**
**D-8531 Schauerheim 60 (DE)**

(72) Erfinder: **Feilhauer, Walter**
**D-8531 Schauerheim 60 (DE)**

(74) Vertreter: **Brose, Manfred, Dr.**
**Pellergasse 45**
**D-8500 Nürnberg 50 (DE)**

Courier Press, Leamington Spa, England.

## Stabelement zum Einklemmen von Folien oder Bahnen und Rahmen hergestellt aus diesen Stabelementen

Die Erfindung geht aus von einem Stabelement der im Oberbegriff des Anspruches 1 angegebenen und durch die CH—A—389 873 bekanntgewordenen Art.

In der CH—A—389 873 ist ein Stabelement beschrieben, das aus einer U-förmigen Profilleiste mit zwei nach innen gerichteten Kantenlippen besteht, so daß im Inneren der Profilleiste eine Unterschnittene Nut gebildet wird. In diese unterschnittene Nut ist eine über einen Rahmen gespannte Kunststoffolie mittels eines Halteorganes eingepreßt, das aus einer extrudierten Leiste aus Kunststoff mit einem offenen, im wesentlichen U-förmigen Profil, zusammengesetzt aus einem die Unterschneidung der Nute, d.h. die Kantenlippen untergreifenden Kopf, einem verengten Halsteil und zwei nach außen gerichteten Kantenlippen besteht. Das Halteorgan hält die Folie sehr wirksam fest, da eine Zugspannung in der Folie die Wirkung hat, daß der Kopf noch fester an die Unterschneidung der Nut gedrückt wird, so daß eine selbstverriegelnde Wirkung entsteht. Dem vorstehend beschriebenen Stabelement mit selbstverriegelnder Wirkung haften jedoch Nachteile an. Ein Nachteil besteht darin, daß bei einem aus den Kantenlippen und dem untergreifenden Kopf bestehenden Klemmteil bei einem einseitigen Zug auf die Folie nicht nur auf der Zugseite eine selbstverriegelnde Wirkung erzeugt wird, sondern infolge einer Anhebung des Kopfes auf der zugabgewandten Seite eine Lockerung der Klemmwirkung hervorgerufen wird. Ein zweiter Nachteil besteht darin, daß die Steigerung der selbstverriegelnden Wirkung begrenzt ist, da der Grad der Umschlingung durch die Folie nicht vergrößert werden kann.

Aus der US—A—2 526 912 sind Klemmvorrichtungen zum Einklemmen von Gewebebahnen bekannt, wie diese beispielsweise bei Kraftfahrzeugen benötigt werden. Bei diesen Klemmvorrtichtungen wird die Klemmwirkung durch einen auf die Bahn ausgeübten Zug nicht verstärkt. Vielmehr ist die Dimensionierung des Klemmelemente so getroffen, daß ein auf die eingeklemmte Folie oder Bahn ausgeübter Zug bezüglich der Klemmwirkung ohne Belang ist. Die Klemmwirkung wird alleine durch die elastischen Kräfte bestimmt, mit denen die beiden Teile der Klemmvorrichtung die Folie oder Bahn festhalten.

Die Aufgabe der Erfindung besteht darin, Stabelemente der im Oberbegriff des Anspruches 1 angegebenen Art insoweit zu verbessern, als bei Beibehaltung des Vorteiles einer besonders hohen Klemmwirkung ohne zusätzliche Hilfsmittel wie Schrauben oder dergleichen, die dadurch erreicht wird, daß durch einen auf die Folie ausgeübten Zug die Klemmwirkung noch verstärkt wird, darüberhinaus noch erreicht wird, daß die Gefahr, daß durch die genannte Zugwirkung evtl. die Klemmwirkung teilweise durch Anheben des einen Profilstabes abgeschwächt wird, beseitigt wird.

Zur Lösung dieser Aufgabe sind die im Kennzeichenteil des Anspruches 1 angegebenen Gestaltungsmerkmale bei der Erfindung vorgesehen, wobei noch in den Unteransprüchen 2 bis 8 für die Aufgabenlösung vorteilhafte und erforderliche Weiterbildungen beansprucht werden. Durch die gekennzeichneten Lösungsmittel werden die Stabelement bekannter Art insoweit verbessert, als bei der Beibehaltung des Vorteils einer besonders hohen Klemmwirkung ohne zusätzliche Hilfsmittel, wie Schrauben oder dergleichen, die dadurch erreicht ist, daß durch einen auf die Folie ausgeübten Zug die Klemmwirkung noch verstärkt wird, darüberhinaus noch erreicht wird, daß durch die genannte Zugwirkung evtl. die Klemmwirkung teilweise durch Anheben des einen Profilstabes abgeschwächt wird, beseitigt wird, wobei evtl. entsprechende Toleranzen bei der Fertigung der Teile ausgeglichen werden, so daß die verstärkte Klemmwirkung mit noch größerer Sicherheit erreicht wird.

Ausführungsbeispiele der Erfindung sind in den Zeichnungen dargestellt und werden im folgenden näher beschrieben. Es zeigen:

Fig. 1 einen Querschnitt durch eine Stabelement, wobei die eingeklemmte Folie am Rand des Stabelementes austritt.

Fig. 2 einen Querschnitt durch das Stabelement wie Fig. 1, wobei die eingeklemmte Folie mittig austritt;

Fig. 3 einen Querschnitt durch ein dreiteiliges Stabelement zur Herstellung von zweischaligen Rahmen;

Fig. 4 die perspektivische Ansicht eines zweischaligen Rahmens, bestehend aus einem dreiteiligen Stabelement;

Fig. 5 eine auseinandergezogene Darstellung einer steckbaren Eckverbindung für einen Rahmen nach Fig. 4;

Fig. 6 ein Klemmelement zum Verbinden zweier Bahnen;

Fig. 7 ein Einsatzteil für ein Klemmelement nach Fig. 6 und

Fig. 8 ein Randelement.

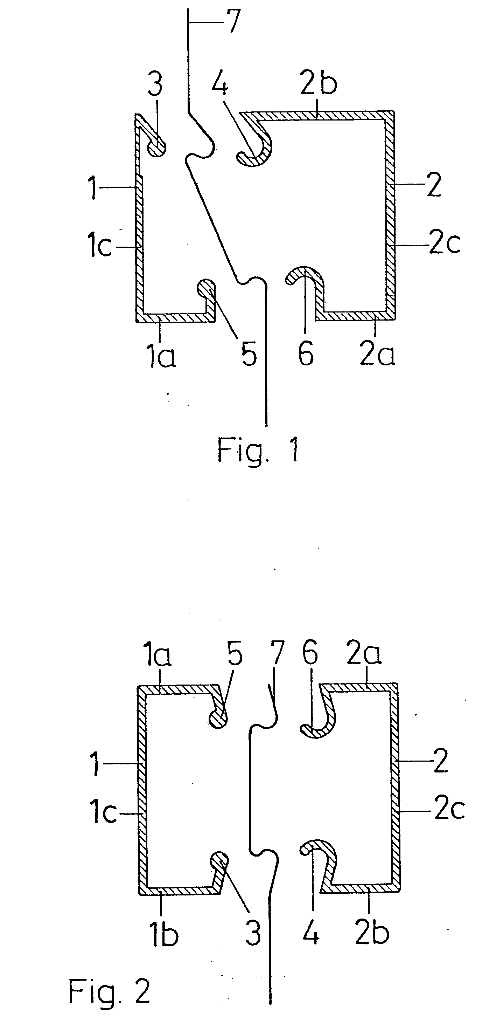

In Fig. 1 ist ein Stabelement zum Einklemmen von Folien oder Bahnen im Querschnitt wiedergegeben, wobei das Stabelement aus zwei Profilstäben 1, 2 besteht. Zwischen den Profilstäben 1, 2 ist eine Folie oder Bahn 7 eingeklemmt. Beide Profilstäbe 1, 2, die im wesentlichen U-förmig und hohl ausgebildet sind, sind jeweils mit zwei im Stabinneren angeordneten Klemmelementen 3, 4 bzw. 5, 6, versehen und sind durch diese miteinander verrastbar. Die einzuklemmende Folie oder Bahn 7 verläuft zwischen den beiden Profilstäben 1, 2 und den verrasteten Klemmelementen 3, 4 bzw. 5, 6 hindurch.

Das Klemmelement 3, 4 besteht im Querschnitt gesehen aus einem Zapfen 3 an dem Profilstab 1 und einer den Zapfen 3 teilweise umfassenden Lippe 4 an den anderen Profilstab 2.

Entsprechendes gilt für das Klemmelement 5, 6, welches im Querschnitt gesehen aus einem Zapfen 5 an dem Profilstab 1 und einer den Zapfen 5 teilweise umfassenden Lippe 6 an dem anderen Profilstab 2 besteht.

Beide Klemmelemente 3, 4 bzw. 5, 6 sind so ausgebildet, daß die zwischen den beiden Profilstäben 1, 2 und den verrasteten Klemmelementen 3, 4 bzw. 5, 6 hindurch verlaufende Folie oder Bahn 7 durch eine beiderseitige Umschlingung der Lippen 4, 6 bei einem auf die Folie 7 ausgeübten Zug oder Spannung, die Lippen 4, 6 gegen die entsprechenden Zapfen 3, 5 unter Verstärkung der Klemmwirkung andrückt.

Wie aus Figur 1 ersichtlich ist, weisen die im wesentlichen U-förmig ausgebildeten Profilstäbe 1, 2, ungleich lange Schenkel 2a, 2b; 1a auf, wobei die jeweiligen Zapfen 3, 5 oder Lippen 4, 6 an den Schenkelenden in den Innenraum des hohlen Profilstabes 1, 2 hineinragend angeordnet sind. Hierbei besteht noch die Möglichkeit, bei einem Profilstab, in Figur 1 beispielsweise beim Profilstab 2, zur Erhöhung der Elastizität dieses Profilstabes das die Schenkel verbindende Mittelteil 2c mit herabgesetzter Materialstärke auszubilden.

Bei dem in Figur 1 im Querschnitt wiedergegebenen rechteckigen Stabelement besitzt der erste, im wesentlichen L-förmige Profilstab 1 lediglich einen Schenkel 1a mit einer Länge gleich einer halben Kantenlänge des zusammengesetzten Profilstabes 1, 2. Bei dem zweiten, komplementären Profilstab 2 besitzt der erste Schenkel 2b eine Länge von im wesentlichen gleich einer vollen und der zweite Schenkel 2a eine Länge gleich einer halben Kantenlänge des Stabelementes 1, 2. Durch diese, im wesentlichen L- bzw. U-förmige Ausbildung der beiden Profilstäbe 1, 2 wird erreicht, daß eine eingeklemmte Folie 7 auf der einen Seite des Stabelementes am Rande, wie dies in Fig. 1 gezeigt ist, und auf der anderen Seite mittig austritt. Bei einer gleichschenkeligen Ausbildung beider Profilstäbe 1, 2 läuft die Folie 7 mittig durch, wie dieses in Fig. 2 wiedergegeben ist.

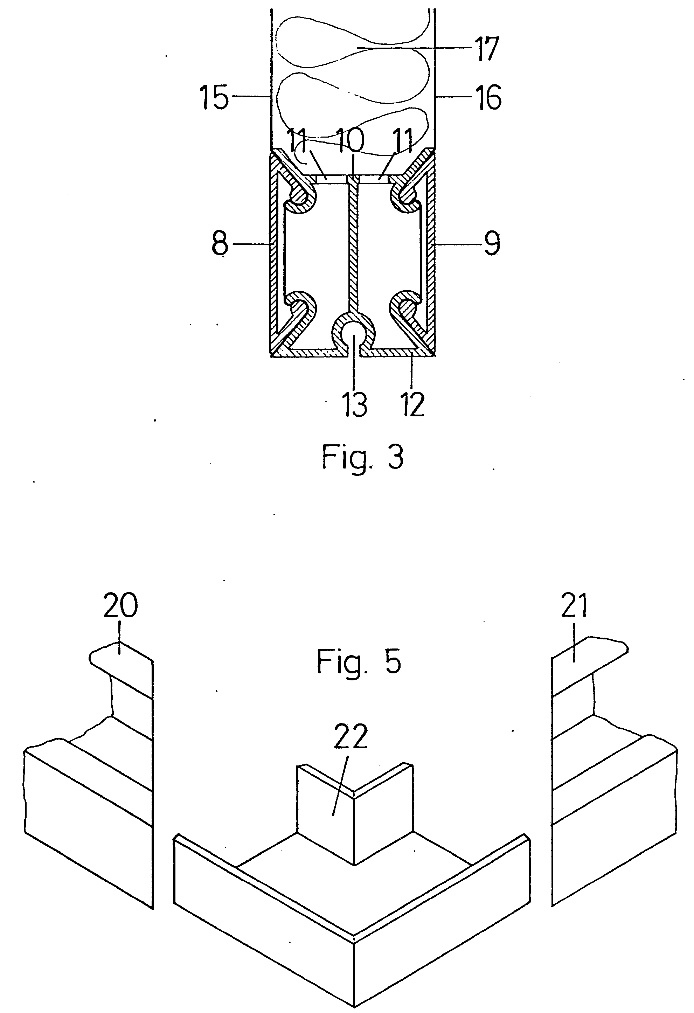

In Figur 3 ist eine dritte Ausbildungsform eines Stabelementes nach der Erfindung im Querschnitt wiedergegeben. Hierbei handelt es sich um ein dreiteiliges Stabelement, welches aus einem Mittelprofilstab 10 und zwei hierzu Komplementären Profilstäben 8, 9 besteht. Beide Profilstäbe 8, 9 sind in ihrer Form identisch und können auf zwei gegenüberliegenden Seiten an den Mittelprofilstab 10 angeklemmt bzw. angerastet werden. Hierdurch ist es möglich, zwei Folien bzw. Bahnen 15, 16 so einzuklemmen, daß zwischen ihnen ein Zwischenraum 17 vorhanden ist.

Sämtliche vorstehend beschriebenen Profilstäbe 1, 2; 8, 9 und 10 können aus Metall bestehen, vorzugsweise Aluminium. Es ist aber auch möglich, diese Profilstäbe aus thermoplastischen Kunststoffen oder glasfaserverstärkte Kunststoffe (GFK) herzustellen. Als Werkstoffe für die Folien oder Bahnen 7; 15 und 16 kommen beschichtete und unbeschichtete Gewebe aus Natur- oder Kunstfasern, wie sie z. B. unter anderem unter dem Warenzeichen "Trevira" bekannt sind oder aus Fasergemischen, ferner Filtertücher und alle transluzenten, transparenten und durchsichtigen Folien, bedruckte Gewebe, aber auch Metallfolien, Bahnen aus Papier usw. in Frage.

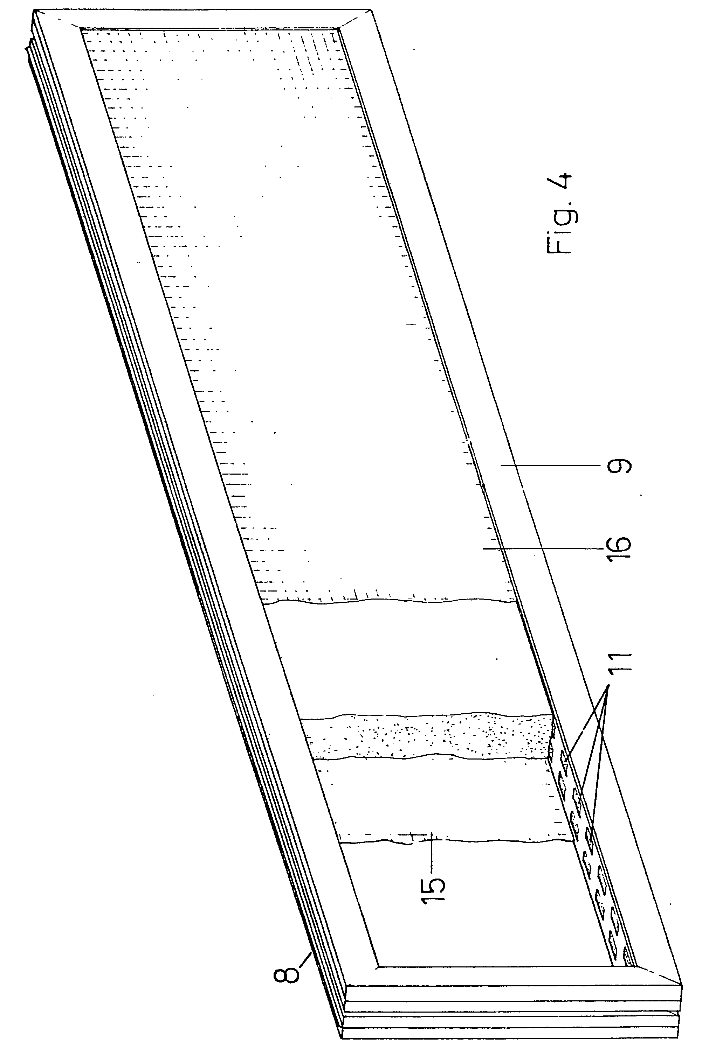

In Figur 4 ist die perspektivische Ansicht eines zweischaligen Rahmens, bestehend aus einem dreiteiligen Stabelement nach Figur 3 wiedergegeben. Bei einem derartigen Rahmen kann der Raum 17 zwischen den beiden Folien oder Bahnen 15, 16 mit wärmedämmendem Material, Schallschluckmaterial, od. dgl. gefüllt oder ausgeschäumt sein. Ist der Zwischenraum 17 lediglich gefüllt, so eignet sich hierfür besonders körniges Material. Wenn der Zwischenraum 17 jedoch ausgeschäumt werden soll, dann müssen die beiden Folien oder Bahnen 15, 16 beim Ausschäumen von außen durch feste Platten, die in den Figuren nicht gezeigt sind, abgestützt werden, bevor der expandierende Schaum in den Zwischenraum eingebracht wird. Dieser Schaum kann durch eine verschließbare Öffnung und die Durchbrechungen 11 im Profilstab 10 hindurch eingeblasen oder eingefüllt werden.

Eine weitere Anwendung des zweischaligen Rahmens nach Figur 4 ist als Dachelement gegeben. In diesem Fall wird die außenliegenden Folie, z. B. die Folie 15, tiefschwarz ausgebildet, so daß diese Folie einen geringen Durchlaßwiderstand für die Wärmestrahlung der Sonne besitzt. Die Innenseite der innenliegenden Folie ist mit einer Reflektionsschicht versehen. Ein derart ausgebildeter zweischaliger Rahmen kann also als Sonnenkollektor dienen, wobie ein flüssiges oder gasförmiges Medium zwecks Speicherung der Wärme hindurchgeleitet werden kann.

Ein besonderer Vorteil des erfindungsgemäßen Stabelementes ist darin zu sehen, daß bei einem aus diesem Stabelement hergestellten Rahmen, so wie dieser beispielsweise in Figur 4 veranschaulicht ist, eine eingelegte Folie automatisch gespannt wird. Dies gilt selbstverständlich sowohl für einen Rahmen, der aus einem Stabelement nach den Figuren 1, 2 besteht, als auch für einen Rahmen nach Fig. 4, bestehend aus einem Stabelement nach Figur 3.

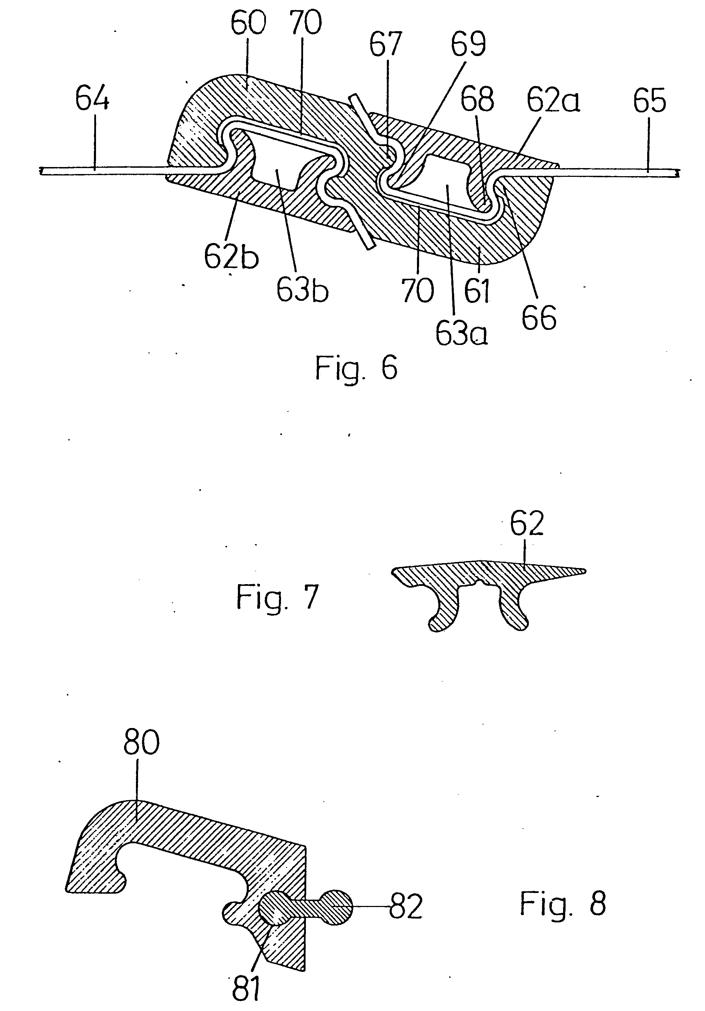

In Figur 5 ist die Ecke z. B. eines viereckigen Rahmens nach Figur 4 gezeigt. Da, wie vorstehend beschrieben worden ist, eine in einen derartigen Rahmen eingelegte Folie automatisch gespannt wird, werden andererseits die den Rahmen bildenden Seitenteile 20, 21 derart kraftschlüssig miteinander verspannt, daß die Ecken nicht verschweißt, vernietet, verschraubt oder auf andere Weise starr miteinander verbunden werden müssen. Es ist lediglich notwendig, die Seitenteile 20 und 21 auf ein Eckteil 22 aufzustecken und die Folie einzuspannen. Das Eckteil 22 ist hierbei formschlüssig in die Seitenteile 20, 21 eingepaßt.

Nach dem Verrasten der zwei oder drei Profilstäbe miteinander haben die zusammengesetzten Stabelemente in etwa die gleichen äquatorialen Trägheitsmomente und Widerstandsmomente wie ein entsprechendes einstückiges Hohlprofil. Wird eine höhere Stabilität gewünscht, so können im Innenraum der Stabelement zusätzliche Rippen oder Wülste vorgesehen sein.

Besteht der Wunsch, aus mehreren Rahmen größere flächenhafte oder auch räumliche Gebilde zusammenzusetzen, so ist, wie aus Figur 3 zu entnehmen ist, in der Außenseite 12 des Profilstabes 10 eine Nut 13 zur Aufnahme einer komplementär geformten Feder vorgesehen. Die Feder kann sodann in eine entsprechende Nut eines weiteren Rahmens eingeschoben werden. Zur gegenseitigen Abdichtung zweier Rahmen ist es lediglich notwendig, an einem Rahmen die Folien 7 oder 15, 16 auf der Außenseite 12 mit Überstand abzuschneiden, so daß eine Lippendichtung gebildet wird. Die Nut und Feder kann auch hantelförmigen Querschnitt, so wie dieses in Figur 8 wiedergegeben ist, besitzen. In diesem Falle werden die Rahmen in Längsrichtung ineinander geschoben und damit miteinander verbunden.

Mit dem Stabelement nach der Efindung kann jede beliebige Rahmenform hergestellt werden: Rechteck, Quadrat, Dreieck, Sechseck usw. Bei entsprechender Winkelstellung der Stabelement-Außenseite 12 können auch räumliche Gebilde hergestellt werden, z. B. Kuppel, langgestreckte Hallen usw.

Mit dem Stabelement nach der Erfindung können auch Folien oder Bahnen unterschiedlicher Stärke eingeklemmt werden. Es braucht nur die Spaltbreite zwischen dem Zapfen 3 und der Lippe 4 vor Einspannen der Folie durch eine Kalibrierungs-Vorrichtung, durch die die Profilstäbe 1, 2, hindurchgezogen werden, entsprechend eingestellt zu werden. Hierdurch wird eine Lagerhaltung für Stabelemente, die für verschieden dicke Folien brauchbar sind, überflüssig.

In Figur 6 ist ein Klemmelement 60 zum Verbinden zweier Bahnen 64 und 65 wiedergegeben. Das Klemmelement 60 besteht aus einem mittleren Verbindungsteil 61 sowie zwei Einsatzteilen 62a, 62b. Das Verbindungsteil 61 hat im Querschnitt gesehen, im wesentlichen die Form eines liegenden S und besitzt zwei auf einander gegenüberliegenden Seiten befindliche Ausnehmungen 63a, 63b. In die Ausnehmung 63a ragen zwei Zapfen 66, 67 hinein, während die zugehörigen Lippen 68, 69 am Einsatzteil 62a angeformt sind. Jeweils ein Zapfen 66 bzw. 67 bildet mit der zugehörigen Lippe 68 bzw. 69 ein Klemmelement. Zwischen den beiden Klemmelementen 66, 68 bzw. 67, 69 hindurch verläuft eine erste eingeklemmte Bahn 65. Zwischen den beiden entsprechenden Klemmelementen hindurch, die von Verbindungsteil 61 und dem zweiten Einsatzteil 62b gebildet werden, verläuft eine zweite Bahn 64. Wird nun auf Bahnen 64, 65 ein Zug ausgeübt, so verstärkt sich die Klemmwirkung, wie vorstehend in Bezug auf die Figuren 1, 2 beschrieben worden ist. Um diese Selbstverstärkung der Klemmwirkung zu ermöglichen, ist ein Raum 70 vorgesehen, der zwischen der jeweils eingeklemmten Bahn 64 bzw. 65 und dem Verbindungsteil 61 verläuft. Bei wachsenden Zug auf die Bahn tritt die Wirkung ein, daß durch den Raum 70 zwischen Bahn und Verbindungsteil 61 die Bahn soviel Kraft auf die Lippen 68, 69 ausüben kann, daß diese stärker gegen die Zapfen 66, 67 angepreßt werden.

Bei sehr dicken Bahnen 64, 65 kann es notwendig sein, die Einsatzteile 62 in das Verbindungsteil 61 einzuwalzen, um eine ausreichende Anfangsklemmwirkung zu erzielen. In diesem Falle ist das Einsatzteil 62 anfangs etwas abgewinkelt, so wie dieses in Fig. 7 wiedergegeben ist.

In Figur 8 ist ein sogenanntes Randelement 80 wiedergegeben. Bei sehr großen und schweren Bahnen kann es notwendig sein, zuerst die Ränder jeweils einer Bahn mit Randelementen 80 zu versehen und anschließend die einzelnen, mit Randelementen versehenen Bahnen miteinander zu verbinden. Hierfür eignet sich ein Randelement 80, wie dieses in Figur 8 wiedergegeben ist. Ein Randelement 80 besteht aus einem halben Klemmelement 60. In ein Randelement 80 kann der Rand einer Bahn mit einem Einsatzteil 62 eingeklemmt werden, wobei auch hier die vorstehend beschriebene selbstverstärkende Wirkung eintritt, wenn auf die eingeklemmte Bahn ein Zug ausgeübt wird. In das Randelement 80 ist außerdem eine Nut 81 eingeformt. Durch eine hantelförmige Feder 82 können jeweils zwei Randelemente 80, die an den Rändern von zwei Bahnen befestigt sind, anschließend miteinander verbunden werden.

Die Erfindung wurde zwar vorstehend unter Bezugnahme auf bestimmte, vorzugsweise Ausführungsbeispiele beschrieben, jedoch können selbstverständlich noch eine Reihe von Änderungen und Abwandlungen vorgenommen werden, ohne daß hierdurch der Rahmen der Erfindung überschritten wird.

**Patentansprüche**

1. Stabelement zum Einklemmen von Folien oder Bahnen, bestehend aus zwei hohl ausgebildeten Profilstäben (1, 2; 61, 62), zwischen denen die Folie (7) oder Bahn (65) hindurch verläuft und so eingeklemmt ist, daß ein auf die Folie oder Bahn ausgeübter Zug die Klemmwirkung verstärkt, wobei die Profilstäbe jeweils mit zwei im Stabinneren angeordneten Klemmelementen (3, 4; 4, 5; 66, 68; 67, 69) versehen und durch diese miteinander verrastbar sind und jedes Klemmelement im Querschnittgesehen aus einem Zapfen (3, 5; 66, 67) an dem einen Profilstab (1) und einer den Zapfen teilweise umfassenden Lippe (4, 6; 68, 69) an dem anderen Profilstab (2) besteht, wobei an dem einen Profilstab (1; 61) beide Zapfen (3, 5, 68, 67) und an dem anderen Profilstab (2; 62) beide Lippen (4, 6; 68, 69) angeordnet sind, dadurch gekennzeichnet, daß die Folie oder Bahn (7; 64, 65) im Stabinneren frei zwischen den beiden Klemmelementen (3, 4; 5, 6; 66, 68; 67, 69) verläuft, wobei die Verstärkung der Klemmwirkung durch eine Umschlingung der Lippe (4, 6; 68, 69) durch die eingeklemmte Folie (7) oder Bahn (65) erfolgt.

2. Stabelement nach Anspruch 1, dadurch gekennzeichnet, daß die im wesentlichen U-förmig ausgebildeten Profilstäbe (1, 2) ungleich lange Schenkel (1a, 2a, 2b) aufweisen, wobei die jeweiligen Zapfen (3, 5) oder Lippen (4, 6) an den Schenkelenden in den Innenraum des hohlen Profilstabes (1, 2) hineinragen.

3. Stabelement nach Anspruch 1 oder 2, da-. durch gekennzeichnet, daß bei einem Profilstab das die Schenkel verbindende Mittelteil (1c oder 2c) zur Erhöhung der Elastizität mit herabgesetzter Materialstärke ausgebildet ist.

4. Stabelement nach Anspruch 1 bis 3, mit rechteckigem Querschnitt, dadurch gekennzeichnet, daß dei den ersten, im wesentlichen L-förmigen Profilstab (1) lediglich der eine Schenkel (1a) eine Länge gleich einer halben Kantenlänge des Profilstabes (1, 2) besitzt, während bei dem zweiten Komplementären Profilstab (2) der erste Schenkel (2b) eine Länge von im wesentlichen gleich einer vollen und der zweite Schenkel (2a) eine Länge gleich einer halben Kantenlänge des Stablementes (1, 2) besitzt, wodurch eine eingeklemmte Folie (7) auf der einen Seite des Stabelementes (1, 2) am Rande und auf der anderen Seite mittig austritt.

5. Stablement nach den Ansprüchen 1 bis 3, gekennzeichnet durch einen Mittel-Profilstab (10) und zwei hierzu komplementären Profilstäben (8, 9), die auf zwei gegenüberliegenden Seiten an den Mittel-Profilstab (10) anrastbar und hierdurch zwei Folien oder Bahnen (15, 16) einklemmbar sind.

6. Ein aus den Stabelementen nach Anspruch 5 hergestellter rechteckiger Rahmen, dadurch gekennzeichnet, daß der Raum (17) zwischen den beiden Folien oder Bahnen (15, 16) mit Wärmedämmaterial, Schallschluckmaterial od. dgl. gefüllt oder ausgeschäumt ist.

7. Rahmen nach Anspruch 6, dadurch gekennzeichnet, daß zum gleichmäßigen Ausschäumen des Innenraumes (17) zwischen den beiden Folien oder Bahnen (15, 16) der Mittel-Profilstab (10) in den Innenraum (17) führende Durchbrechungen (11) aufweist.

8. Rahmen nach Anspruch 6 oder 7, dadurch gekennzeichnet, daß in der Außenseite (12) des Profilstabes (10) eine Nut (13) zur Aufnahme einer Feder für die Zusammenfügung mehrerer Rahmen vorgesehen ist.

**Revendications**

1. Elément de baguette pour fixer par serrage des feuilles ou des bandes, constitué par deux profilés creux (1, 2; 61, 62) entre lesquels s'étend la feuille (7) ou la bande (65) qui est pincée de telle sorte qu'une traction exercée sur la feuille ou la bande renforce l'effet de serrage, les profilés étant munis chacun de deux éléments de serrage (3, 4, 5, 6; 66; 68; 67, 69) et pouvant s'encliqueter l'un avec l'autre grâce à ceux-ci, chaque élément de serrage étant constitué, vu en coupe transversale, par un bourrelet (3, 5; 66, 67) sur l'un des profilés (1) et par une lèvre (4, 6, 68, 69) sur l'autre profilé (2) entourant partiellement le bourrelet, caractérisé en ce que la feuille ou la bande (7; 64, 65) s'étend librement à l'intérieur de la baguette entre les deux éléments de serrage (3, 4; 5, 6; 66, 68; 67, 69), le renforcement de l'effet de serrage s'opérant grâce à un enroulement de la lèvre (4, 6; 68, 69) par la feuille (7) ou la bande (65) serrée, les deux bourrelets (3, 5, 66, 67) étant disposés sur l'un des profilés (1; 61) et les deux lèvres (4, 6; 68, 69) étant disposées sur l'autre profilé (2, 62).

2. Elément de baguette selon la revendication 1, caractérisé en ce que les profilés (1, 2) sensiblement en forme de U ont des ailes (1a, 2a, 2b) de longueur inégale, les bourrelets (3, 5) ou les lèvres (4, 6) correspondants situés aux extrémités des ailes saillant dans l'espace intérieur du profilé creux (1, 2).

3. Elément de baguette selon la revendication 1 ou 2, caractérisé en ce que, dans un profilé, l'élément médian (1c ou 2c) reliant les ailes a une épaisseur de matière réduite pour accroître l'élasticité.

4. Elément de baguette selon la revendication 1 à 3, de section transversale rectangulaire, caractérisé en ce que, dans le premier profilé (1) sensiblement en forme de L, l'une des ailes (1a) a simplement une longueur égale à la moitié de la longueur d'arête du profilé (1, 2), tandis que dans le deuxième profilé complémentaire (2), la première aile (2b) a une longueur égale à la longueur totale d'arête du profilé (1, 2) et la deuxième aile (2a) a une longueur égale à la moitié de la longueur d'arête du profilé (1, 2) d'où il résulte qu'une feuille (7) serrée entre les profilés sort sur le bord, sur l'un des côtés, et au milieu sur l'autre.

5. Elément de baguette selon les revendications 1 à 3, caractérisé par un profilé médian (10) et par deux profiles complémentaires à celui-ci (8, 9), qui peuvent s'encliqueter sur le profilé médian (10) sur deux côtés opposés, ce qui permet de pincer deux feuilles ou bandes (15, 16).

6. Cadre rectangulaire constitué par les éléments de baguette selon la revendication 5, caractérisé en ce que le volume (17) entre les deux feuilles ou bandes (15, 16) est rempli de matériau thermiquement isolant, de matériau insonorisant ou l'analogue, ou bien on fait expanser ces matériaux à l'intérieur.

7. Cadre selon la revendication 6, caractérisé en ce que, pour assurer une expansion uniforme de la mousse dans le volume intérieur (17) entre les deux feuilles ou bandes (15, 16), le profilé médian (10) comporte des perforations (11) allant dans le volume intérieur (17).

8. Cadre selon la revendication 6 ou 7, caractérisé en ce qu'on prévoit dans le côté extérieur (12) du profilé (10) une rainure (13) pour recevoir une languette servant à l'assemblage de plusieurs cadres.

## Claims

1. Rod element for the wedging-in of films or webs and consisting of two hollow profile rods (1, 2; 61, 62), between which the film (7) or web (65) extends through and is so wedged in that a tension exerted on the film or web enhances the wedging effect, wherein the profile rods are each provided with two wedging elements (3, 4; 5, 6; 66, 68; 67, 69) arranged in the interior of the rod and through which these are detentable one with the other and each wedging element seen in cross-section consists of a spigot (3, 5; 66, 67) at the one profile rod (1) and a lip (4, 6; 68, 69), partially encompassing the spigot, at the other profile rod (2), wherein both spigots (3, 5, 66, 67) are arranged at the one profile rod (1; 61) and both lips (4, 6; 68, 69) at the other profile rod (2; 62), characterised thereby, that the film or web (7; 64, 65) extends freely in the interior of the rod between both the wedging elements (3, 4; 5, 6; 66, 68; 67, 69), wherein the enhancement of the wedging effect takes place through a looping around the lip (4, 6; 68, 69) by the wedged-in film (7) or web (65).

2. Rod element according to claim 1, characterised thereby, that the profile rods (1, 2) are formed substantially in U-shape and display unequally long limbs (1a, 2a, 2b), wherein the respective spigots (3, 5) or lips (4, 6) at the ends of the limbs project into the interior space of the hollow profile rod (1, 2).

3. Rod element according to claim 1 or 2, characterised thereby, that the middle part (1c or 2c) connecting the limbs in one profile rod is formed with reduced material thickness to increase the elasticity.

4. Rod element according to claim 1 to 3 of rectangular cross-section, characterised thereby, that in the case of the first and substantially L-shaped rod (1), merely the one limb (1a) has a length equal to half an edge length of the profile rod (1, 2), whilst in the case of the second and complementary profile rod (2), the first limb (2b) has a length substantially equal to a full edge length of the rod element (1, 2) and the second limb (2a) a length equal to half an edge length of the rod element (1, 2), whereby a wedged-in film (7) issues at the edge of the one side of the rod element (1, 2) and centrally on the other side.

5. Rod element according to the claims 1 to 3, characterised by a central profile rod (10) and two profile rods (8, 9), which are complementary thereto and detentable at the central profile rod (10) on two opposite sides, whereby two films or webs (15, 16) may be wedged in.

6. A rectangular frame made of the rod elements according to claim 5, characterised thereby, that the space (17) between both the films or webs (15, 16) is filled or foamed out by thermally insulating material, sound-absorbing material or the like.

7. Frame according to claim 6, characterised thereby, that the central profile rod (10) has passages (11) leading into the interior space (17) for the uniform foam-filling of the interior space (17) between both the films or webs (15, 16).

8. Frame according to claim 6 or 7, characterised thereby, that a groove (13) for the reception of a key for joining several frames together is provided in the outside (12) of the profile rod (10).

Fig. 1

Fig. 2

0 006 844

Fig. 3

Fig. 5

2

Fig. 4

Fig. 6

Fig. 7

Fig. 8